# EUROPEAN PATENT SPECIFICATION

(11) **EP 2 976 796 B1**
(45) Date of publication and mention of the grant of the patent: **12.09.2018**
(21) Application number: 14708431.3
(22) Date of filing: 20.02.2014
(51) Int. Cl.: H01M 10/654, H01M 10/659, C09K 5/02, H01M 2/16, H01M 10/42, H01M 4/62, H01M 2/02, H01M 4/13, H01M 4/02, H01M 10/052

(54) **BATTERY WITH INTERNAL PHASE CHANGE MATERIALS**
BATTERIE MIT INTERNEN SPEICHERSTOFFEN
BATTERIE À MATÉRIAUX À VARIATION DE PHASE INTERNE

(30) Priority: 21.02.2013 US 201361767564 P
(43) Date of publication of application: 27.01.2016
(73) Proprietor: Robert Bosch GmbH, 70442 Stuttgart (DE)
(72) Inventor: CHRISTENSEN, John, Mountain View 94043 (US); KOZINSKY, Boris, Waban, MA 02468 (US)
(86) International application number: PCT/US2014/017406
(87) International publication number: WO 2014/130676

(56) References cited:
- CN-C- 100 438 203
- DE-A1-102010 013 222
- US-A1- 2004 038 122
- US-A1- 2006 063 066
- US-A1- 2009 004 556
- US-A1- 2012 135 281

## Description

### Field

This disclosure relates to batteries and more particularly to batteries which are exposed to internally or externally generated heat.

### Background

Batteries are a useful source of stored energy that can be incorporated into a number of systems. While generally safe, the amount of energy stored within a battery as well as the materials used to manufacture the battery can present safety issues under different scenarios. Safety is particularly an issue when a battery is subjected to increased temperatures either as a result of internal processes or as a result of the environment in which the battery is located.

By way of example, when batteries are charged or discharged, they typically generate heat due to a finite internal resistance that includes ohmic, mass-transfer, and kinetic terms. Exothermic side reactions can also generate heat within the battery. This heat generation can pose a safety risk if it is large and rapid. For instance, commercial Li-ion cells generally go into thermal runaway if the internal cell temperature climbs above the decomposition temperature of the cathode (∼180 to 220 °C, depending upon the chemistry and the state of charge). Often the events that lead to a temperature rise above this critical temperature are triggered at much lower temperatures. For example, exothermic anode film decomposition can occur at ∼120 °C, providing enough energy to raise the battery temperature above 180 °C.

In addition to safety concerns, increased temperatures impact the operational characteristics of the battery. At milder temperatures (40 to 100 °C for Li-ion batteries), aging of the battery is usually accelerated. This is due to the fact that most detrimental side reactions are thermally activated (although not all aging mechanisms in batteries are accelerated at high temperature). It is therefore advisable to cool batteries during operation and/or at high ambient temperatures in order to enhance their cycle and/or calendar life. There are numerous cooling concepts for commercial batteries, including active air cooling, liquid cooling, and the use of materials with high thermal conductivity.

External cooling of batteries, however, does not prevent localized areas of increased heat. For example, batteries that are placed in an ice bath and then heated internally during high current discharge could be maintained at the melting temperature of ice until the ice melts completely, but only at the external surface of the battery. Internally, the temperature of the battery at localized positions would be significantly higher, creating an uneven heat profile. The internal temperature of the battery could thus climb well above the melting temperature of ice.

What is needed therefore is a battery that is less susceptible to the deleterious effects of increased temperature. A further need exists for a battery which reduces localized heat profile fluctuations.

US 2012/0135281 A1 describes an electrochemical cell with a negative electrode, a positive electrode and a separator positioned between the negative electrode and the positive electrode. The electrochemical cell comprises a phase change material, e.g. paraffin, polyethylene glycol or an inorganic hydrate.

### Summary

The present invention provides an electrochemical cell with the features of claim 1 and a method of operating an electrochemical cell with the features of claim 7.

### Brief Description of the Drawings

The above-described features and advantages, as well as others, should become more readily apparent to those of ordinary skill in the art by reference to the following detailed description and the accompanying figures in which:

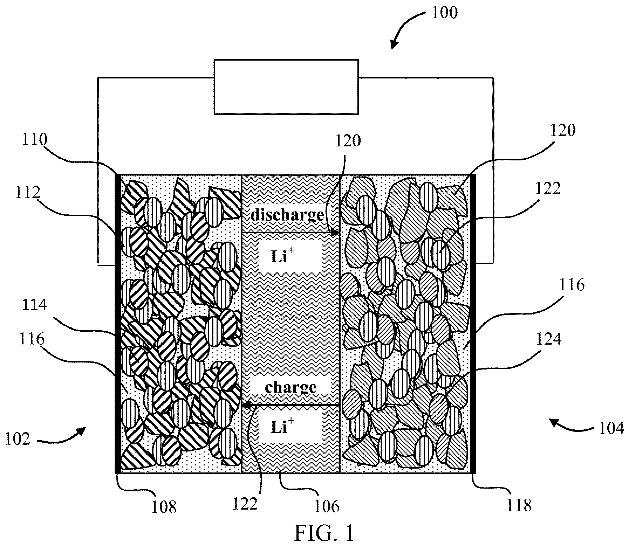

FIG. 1 depicts a schematic of a battery system including a cell with a phase-change material in the negative electrode and in the positive electrode in accordance with principles of the present disclosure.

### Description

For the purposes of promoting an understanding of the principles of the disclosure, reference will now be made to the embodiments illustrated in the drawings and described in the following written specification. It is understood that no limitation to the scope of the disclosure is thereby intended. It is further understood that the present disclosure includes any alterations and modifications to the illustrated embodiments and includes further applications of the principles of the disclosure as would normally occur to one skilled in the art to which this disclosure pertains.

FIG. 1 depicts a schematic of an electrochemical cell 100. The electrochemical cell 100 includes a negative electrode 102 separated from a positive electrode 104 by a porous separator 106. The negative electrode 102 in this embodiment includes a current collector 108, active materials 110, inert material 112, and phase change material 114. The negative electrode 102 may be formed from lithium metal or a lithium-insertion compound.

The positive electrode 104 in this embodiment includes a current collector 118, active materials 120, inert material 122, and phase change material 124. The inert material 122 may form a porous matrix which is an electrically conductive matrix formed from a conductive material such as conductive carbon or a nickel foam, although various alternative matrix structures and materials may be used. The separator 106 prevents the negative electrode 102 from electrically connecting with the positive electrode 104.

The electrochemical cell 100 includes an electrolyte solution 116 present in the positive electrode 104 and in some embodiments in the separator 106 and the negative electrode 102.

In the case in which the metal is Li, the electrochemical cell 100 discharges with lithium metal in the negative electrode 102 ionizing into a Li⁺ ion with a free electron e⁻. Li⁺ ions travel through the separator 106 in the direction indicated by arrow 120 toward the positive electrode 104.

As the cell discharges (or charges) heat may be generated. Heat may also be generated externally to the cell 100 and transferred into the cell 100. Phase change materials 114 /124 maintain the temperature of a system by accepting (or rejecting) thermal energy at constant temperature (transition temperature) until the material is completely transformed from phase A to phase B. The phase change materials 114/124 are distributed throughout the cell so as to minimize temperature variation throughout the cell. In other embodiments, the phase change materials 114/124 are located at the external surface of a battery in order to maintain the surface temperature at the phase-change temperature. For example, batteries that are placed in an ice bath and then heated internally during high current discharge could be maintained at the melting temperature of ice until the ice melts completely, but only at the external surface of the battery. The internal temperature of the battery could climb well above the melting temperature of ice.

Thus, the phase-change material 114/124 prevents excessive temperatures in the battery that may lead to premature aging or safety hazards as well as to improve the uniformity of temperature throughout the battery. The phase-change material is incorporated into the anode, cathode, separator, or other parts of the cell in different embodiments.

The amount of phase-change material (PCM) is chosen such that it can absorb a sufficient amount of thermal energy during cell heating but is not so great as to compromise the energy density or power density of the battery. The phase-transition temperature is chosen to be a temperature below that which is required to prematurely age the cell or pose a safety risk. It is likewise far enough above the normal operating temperature of the cell that it neither limits the rate capability of the cell (which is enhanced at higher temperatures) nor allows the PCM to completely change its phase during a typical impulse of thermal energy resulting from cell heating since once the PCM completely changes phase, the temperature of the cell can climb beyond the phase-transition temperature. Hence it is essential to avoid complete phase transition by incorporating enough PCM into the cell and avoiding too low a transition temperature.

It is preferable, but not necessary, that the PCM be an inert component that does not react with other cell components at voltages, currents, and temperatures that are experienced during normal cell operation. Any reactions that do occur between the PCM and other components should be benign and reversible (or almost completely reversible). The phase change itself should also be reversible (or almost completely reversible).

External cooling of the battery (either passively or actively) is employed to absorb thermal energy from the battery and prevent the PCM from completely changing phase. External cooling can also be employed while the battery is at open circuit in order to reverse the internal phase change process. Doing so allows the PCM to absorb more thermal energy the next time such energy is generated inside the battery.

The phase change materials according to the invention are set forth in the table below:

| **Solid-solid PCMS** | **Tm [C]** | **dH [J/g]** |
|---|---|---|
| | | |
| 38.2%NPG/61.8%PE | 26-32 | 18-75 |
| 38.2%NPG/61.8%TAM | 22-35 | 27-33 |
| 76.4%NPG/33.6%TAM | 28-38 | 75-80 |
| 76.4%NPG/33.6%PE | 31-37 | 35-46 |
| 91%NPG/9%PE | 31-36 | 68 |
| 91%NPG/9%TAM | 30-39 | 143-150 |
| Neopentyl glycol (NPG) | 43 | 130 |
| Diamnopentacrythritol | 68 | 184 |
| 2-Amino-2-methyl-1,3-propanediol | 78 | 264 |
| 2-Methyl-2-mtro- 1,3 - propanediol | 79 | 201 |
| Trumethylolethane | 81 | 192 |
| Pentaglycerin | 81 | 192 |
| 2-Hydroxymethyl-2-methyl-1,3-propanediol | 81 | 192 |
| Monoaminopentaerythritol | 86 | 192 |
| Cross-linked polyethylene | 110-115 | 125-146 |

The three tables below show other phase change materials not according to the present invention:

| **Name** | **T fusion [C]** | **dH (kJ/mol)** | **dH (J/g)** |
|---|---|---|---|
| Nitrosobenzene | 67 | 31 | 289.42209 |
| Octatriacontane | 78.6 | 133.2 | 248.95986 |
| Stearic acid | 69.3 | 61.2 | 215.13087 |
| Hexadecanoic acid | 62.5 | 53.7 | 209.41878 |
| 1H-Pyrazole | 70.7 | 14 | 205.64949 |
| Tetradecanoic acid | 54.2 | 45.1 | 197.48567 |
| 2,5-Xylenol | 74.8 | 23.4 | 191.54579 |
| 1,6-Hexanediol | 41.5 | 22.2 | 187.85858 |
| Dodecanoic acid | 43.8 | 36.3 | 181.21187 |
| Dimethyl oxalate | 54.8 | 21.1 | 178.67879 |
| 4-Methylaniline | 43.6 | 18.9 | 176.3833 |
| Pentatriacontane | 74.6 | 86.3 | 175.06953 |
| Hexatriacontane | 75.8 | 87.7 | 172.98752 |
| Cyanamide | 45.56 | 7.27 | 172.93054 |
| 2,3-Xylenol | 72.5 | 21 | 171.90007 |
| Tritriacontane | 71.2 | 79.5 | 171.00709 |
| Dotriacontane | 69.4 | 75.8 | 168.12091 |
| 1,3,5-Trioxane | 60.29 | 15.11 | 167.74351 |
| 1-Octadecanol | 57.9 | 45 | 166.36229 |
| Tetratriacontane | 72.5 | 79.4 | 165.78969 |
| Octacosane | 61.1 | 65.1 | 164.90991 |
| Nonacosane | 63.7 | 66.9 | 163.65531 |
| Hexacosane | 56.1 | 60 | 163.61837 |
| Heptacosane | 59.23 | 61.9 | 162.5807 |
| Triacontane | 65.1 | 68.3 | 161.53713 |
| Pentacosane | 53.93 | 56.9 | 161.3356 |
| Pyrazine | 51 | 12.9 | 161.07282 |
| Tetracosane | 50.4 | 54.4 | 160.63593 |
| Docosane | 43.6 | 48.8 | 157.11526 |
| 4-Chloroaniline | 70.5 | 20 | 156.77421 |
| Tricosane | 47.76 | 50.86 | 156.67212 |
| 1,2,4,5-Tetramethylbenzene | 79.3 | 21 | 156.46188 |
| Phosphonic acid | 74.4 | 12.8 | 156.10518 |
| 2,6-Xylenol | 45.8 | 18.9 | 154.71006 |
| Heneicosane | 40.01 | 45.21 | 152.44087 |
| trans-2-Butenoic acid | 71.5 | 13 | 151.00476 |
| 3,4-Xylenol | 65.1 | 18.1 | 148.16149 |
| 1,3-Benzenediamine | 66 | 15.57 | 143.97869 |
| 3,5-Xylenol | 63.4 | 17.4 | 142.43149 |
| Thymol | 49.5 | 21.3 | 141.79487 |
| 1-Eicosanol | 65.4 | 42 | 140.68184 |
| Maleic anhydride | 52.56 | 13.6 | 138.69484 |
| 1-Hexadecanol | 49.2 | 33.6 | 138.59099 |
| Phosphoric acid | 42.4 | 13.4 | 136.74167 |
| Chloroacetic acid | 63 | 12.28 | 129.95122 |
| 2-Nitrophenol | 44.8 | 17.7 | 127.23835 |
| p-Dichlorobenzene | 53.09 | 18.19 | 123.73981 |
| trans-Azobenzene | 67.88 | 22.52 | 123.58687 |
| 1-Chloro-3-nitrobenzene | 44.4 | 19.4 | 123.1316 |
| 4-Nitrotoluene | 51.63 | 16.81 | 122.57815 |
| Phenol | 40.89 | 11.51 | 122.30239 |
| Biphenyl | 68.93 | 18.57 | 120.42255 |
| Benzeneacetic acid | 76.5 | 16.3 | 119.72178 |
| 2-Nitroaniline | 71 | 16.1 | 116.56193 |
| 4-Chlorophenol | 42.8 | 14.1 | 109.67983 |
| Diphenylamine | 53.2 | 18.5 | 109.32385 |
| Benzophenone | 47.9 | 18.19 | 99.826032 |
| 1,3,5-Trichlorobenzene | 62.8 | 18.1 | 99.753647 |
| 1,2,3-Trichlorobenzene | 51.3 | 17.9 | 98.651397 |

Other PCMs include:

| **Name** | **T fusion [C]** | **dH (J/g)** |
|---|---|---|
| Heneicosane | 40.01 | 152.44087 |
| Phenol | 40.89 | 122.30239 |
| 1,6-Hexanediol | 41.5 | 187.85858 |
| Phosphoric acid | 42.4 | 136.74167 |
| 4-Chlorophenol | 42.8 | 109.67983 |
| 4-Methylaniline | 43.6 | 176.3833 |
| Docosane | 43.6 | 157.11526 |
| Dodecanoic acid | 43.8 | 181.21187 |
| 1-Chloro-3-nitrobenzene | 44.4 | 123.1316 |
| 2-Nitrophenol | 44.8 | 127.23835 |
| Cyanamide | 45.56 | 172.93054 |
| 2,6-Xylenol | 45.8 | 154.71006 |
| Tricosane | 47.76 | 156.67212 |
| Benzophenone | 47.9 | 99.826032 |
| 1-Hexadecanol | 49.2 | 138.59099 |
| Thymol | 49.5 | 141.79487 |
| Tetracosane | 50.4 | 160.63593 |
| Pyrazine | 51 | 161.07282 |
| 1,2,3-Trichlorobenzene | 51.3 | 98.651397 |
| 4-Nitrotoluene | 51.63 | 122.57815 |
| Maleic anhydride | 52.56 | 138.69484 |
| p-Dichlorobenzene | 53.09 | 123.73981 |
| Diphenylamine | 53.2 | 109.32385 |
| Pentacosane | 53.93 | 161.3356 |
| Tetradecanoic acid | 54.2 | 197.48567 |
| Dimethyl oxalate | 54.8 | 178.67879 |
| Hexacosane | 56.1 | 163.61837 |
| 1-Octadecanol | 57.9 | 166.36229 |
| Heptacosane | 59.23 | 162.5807 |
| 1,3,5-Trioxane | 60.29 | 167.74351 |
| Octacosane | 61.1 | 164.90991 |
| Hexadecanoic acid | 62.5 | 209.41878 |
| 1,3,5-Trichlorobenzene | 62.8 | 99.753647 |
| Chloroacetic acid | 63 | 129.95122 |
| 3,5-Xylenol | 63.4 | 142.43149 |
| Nonacosane | 63.7 | 163.65531 |
| Triacontane | 65.1 | 161.53713 |
| 3,4-Xylenol | 65.1 | 148.16149 |
| 1-Eicosanol | 65.4 | 140.68184 |
| 1,3-Benzenediamine | 66 | 143.97869 |
| Nitrosobenzene | 67 | 289.42209 |
| trans-Azobenzene | 67.88 | 123.58687 |
| Biphenyl | 68.93 | 120.42255 |
| Stearic acid | 69.3 | 215.13087 |
| Dotriacontane | 69.4 | 168.12091 |
| 4-Chloroaniline | 70.5 | 156.77421 |
| 1H-Pyrazole | 70.7 | 205.64949 |
| 2-Nitroaniline | 71 | 116.56193 |
| Tritriacontane | 71.2 | 171.00709 |
| trans-2-Butenoic acid | 71.5 | 151.00476 |
| 2,3-Xylenol | 72.5 | 171.90007 |
| Tetratriacontane | 72.5 | 165.78969 |
| Phosphonic acid | 74.4 | 156.10518 |
| Pentatriacontane | 74.6 | 175.06953 |
| 2,5-Xylenol | 74.8 | 191.54579 |
| Hexatriacontane | 75.8 | 172.98752 |
| Benzeneacetic acid | 76.5 | 119.72178 |
| Octatriacontane | 78.6 | 248.95986 |
| 1,2,4,5-Tetramethylbenzene | 79.3 | 156.46188 |

Other PCMs include:

| **Name** | **Tf [C]** | **dH [J/g]** |
|---|---|---|
| Caprilone | 40 | 260 |
| Docasyle | 40 | 201 |
| N-Henicosan | 40.5 | 161 |
| Phenol | 41 | 120 |
| N-Lauric | 43 | 183 |
| P-Joluidine | 43.3 | 167 |
| Cynamide | 44 | 209 |
| N-Docosane | 44.5 | 157 |
| N-Tricosane | 47.6 | 130 |
| Hydrocinna | 48 | 118 |
| Cetyl | 49.3 | 141 |
| O-Nitroanili | 50 | 93 |
| Camphene | 50 | 239 |
| Diphenyl | 52.9 | 107 |
| N-Penta Cosane | 53.7 | 164 |
| Myristic Acid | 54 | 199 |
| Oxolate | 54.3 | 178 |
| Tristearine | 54.5 | 191 |
| O-Xylene | 55 | 121 |
| β-Chloroacetic acid | 56 | 147 |
| N-Hexacosane | 56.3 | 255 |
| Nitro Naphthalene | 56.7 | 103 |
| α-Chloroacetic acid | 61.2 | 130 |
| N-Octacosane | 61.4 | 134 |
| Palmitic Acid | 61.8 | 164 |
| Bees Wax | 61.8 | 177 |
| Glyolic Acid | 63 | 109 |
| P-Bromophenol | 63.5 | 86 |
| Azobenzene | 67.1 | 121 |
| Acrylic Acid | 68 | 115 |
| Dintro Toluene | 70 | 111 |
| Phenylacetic Acid | 76.7 | 102 |
| Thiosinamine | 77 | 140 |
| Caprilone | 40 | 260 |
| N-Hexacosane | 56.3 | 255 |
| Camphene | 50 | 239 |
| Cynamide | 44 | 209 |
| Docasyle | 40 | 201 |
| Myristic Acid | 54 | 199 |
| Tristearine | 54.5 | 191 |
| N-Lauric | 43 | 183 |
| Oxolate | 54.3 | 178 |
| Bees Wax | 61.8 | 177 |
| P-Joluidine | 43.3 | 167 |
| N-Penta Cosane | 53.7 | 164 |
| Palmitic Acid | 61.8 | 164 |
| N-Henicosan | 40.5 | 161 |
| N-Docosane | 44.5 | 157 |
| β-Chloroacetic acid | 56 | 147 |
| Cetyl | 49.3 | 141 |
| Thiosinamine | 77 | 140 |
| N-Octacosane | 61.4 | 134 |
| N-Tricosane | 47.6 | 130 |
| α-Chloroacetic acid | 61.2 | 130 |
| O-Xylene | 55 | 121 |
| Azo benzene | 67.1 | 121 |
| Phenol | 41 | 120 |
| Hydrocinna | 48 | 118 |
| Acrylic Acid | 68 | 115 |
| Dintro Toluene | 70 | 111 |
| Glyolic Acid | 63 | 109 |
| Diphenyl | 52.9 | 107 |
| Nitro Naphthalene | 56.7 | 103 |
| Phenylacetic Acid | 76.7 | 102 |
| O-Nitroanili | 50 | 93 |
| P-Bromophenol | 63.5 | 86 |

## Claims

1. An electrochemical cell (100) comprising:
a negative electrode (102);
a positive electrode (104);
a separator (106) positioned between the negative electrode (102) and the positive electrode (104); and
a phase change material (114, 124) within the electrochemical cell (100),
**characterized in that**
the phase change material (114, 124) is one of the solid-solid phase change materials (114, 124): 38.2%NPG/61.8%PE, 38.2%NPG/61.8%TAM, 76.4%NPG/33.6%TAM, 76.4%NPG/33.6%PE, 91%NPG/9%PE, 91%NPG/9%TAM, Neopentyl glycol (NPG), Diamnopentacrythritol, 2-Amino-2-methyl-1, 3-propanediol, 2-Methyl-2-mtro-1, 3-propanediol, Trumethylolethane, Pentaglycerin, 2-Hydroxymethyl-2-methyl-1, 3-propanediol, Monoaminopentaerythritol, Cross-linked polyethylene.

2. The electrochemical cell of claim 1, wherein a first portion (124) of the phase change material (124) is located within the positive electrode (104).

3. The electrochemical cell of claim 2, wherein a second portion (114) of the phase change material (114) is located within the negative electrode (102).

4. The electrochemical cell of claim 3, wherein a third portion of the phase change material is located within the separator (106).

5. The electrochemical cell of claim 1, wherein the negative electrode (102) includes a form of lithium.

6. The electrochemical cell of claim 4, wherein a fourth portion of the phase change material is located at an external surface of the electrochemical cell (100).

7. A method of operating an electrochemical cell (100) comprising:
generating heat with an electrochemical cell (100) including a negative electrode (102), a positive electrode (104), and a separator (106) positioned between the negative electrode (102) and the positive electrode (104) by charging or discharging the electrochemical cell (100); and
using the generated heat to change a phase of a phase change material (114, 124) within the electrochemical cell (100);
**characterized in that**
the phase of one of the following solid-solid phase change materials (114, 124) is changed: 38.2%NPG/61.8%PE, 38.2%NPG/61.8%TAM, 76.4%NPG/33.6%TAM, 76.4%NPG/33.6%PE, 91%NPG/9%PE, 91%NPG/9%TAM, Neopentyl glycol (NPG), Diamnopentacrythritol, 2-Amino-2-methyl-1,3-propanediol, 2-Methyl-2-mtro-1, 3-propanediol, Trumethylolethane, Pentaglycerin, 2-Hydroxymethyl-2-methyl-1,3-propanediol, Monoaminopentaerythritol, Cross-linked polyethylene.

8. The method of claim 7, the method of claim 13, wherein generating heat with the electrochemical cell (100) comprises:
generating heat while the electrochemical cell (100) discharges by a process in which lithium metal in the negative electrode (102) ionizes into a Li⁺ ion and a free electron and the Li⁺ ions travel through the separator (106) toward the positive electrode (104).

9. The method of claim 8, further comprising:
placing the electrochemical cell (100) in an open circuit configuration: and
changing the phase of the phase change material (114, 124) by applying external cooling to the electrochemical cell (100) while it is in the open circuit configuration.

10. The method of claim 7, wherein using the generated heat to change the phase of the phase change material (114, 124) within the electrochemical cell (100) comprises:
using the generated heat to change the phase of a first phase change material portion (114) within the negative electrode (102) of the electrochemical cell (100).

11. The method of claim 10, wherein using the generated heat to change the phase of the phase change material (114, 124) within the electrochemical cell (100) comprises:
using the generated heat to change the phase of a second phase change material portion (124) within the positive electrode (104) of the electrochemical cell (100).

## Patentansprüche

1. Elektrochemikalische Zelle (100), umfassend:
eine negative Elektrode (102);
eine positive Elektrode (104);
einen Separator (106), der zwischen der negativen Elektrode (102) und der positiven Elektrode (104) positioniert ist; und
ein Phasenwechselmaterial (114, 124) innerhalb der elektrochemischen Zelle (100),
dadurch charakterisiert, dass
das Phasenwechselmaterial(114, 124) eines von den Fest-Festphasenwechselmaterialien (114, 124) ist: 38,2%NPG/61,8%PE,38,2%NPG/61,8%TAM,76,4%NPG/33,6%T AM, 76.4%NPG/33.6%PE,91%NPG/9%PE,91%NPG/9%TAM, Neopentylglykol (NPG),Diamnopentacrythritol, 2-Amino-2-methyl-1,3-propanediol, 2-Methyl-2-mtro-1,3-propandiol, Trumethylolethan, Pentaglycerin, 2-Hydroxymethyl-2-methyl-1,3-propandiol, Monoaminopentaerythritol, quervernetztes Polyethylen.

2. Elektrochemische Zelle nach Anspruch 1, wobei ein erster Abschnitt (124) von dem Phasenwechselmaterial (124) innerhalb der positiven Elektrode (104) positioniert ist.

3. Elektrochemische Zelle nach Anspruch 2, wobei ein zweiter Abschnitt (114) von dem Phasenwechselmaterial (114) innerhalb der negativen Elektrode (102) positioniert ist.

4. Elektrochemische Zelle nach Anspruch 3, wobei ein dritter Abschnitt von dem Phasenwechselmaterial innerhalb des Separators (106) positioniert ist.

5. Elektrochemische Zelle nach Anspruch 1, wobei die negative Elektrode (102) eine Form von Lithium umfasst.

6. Elektrochemische Zelle nach Anspruch 4, wobei ein vierter Abschnitt des Phasenwechselmaterials an einer Außenfläche von der elektrochemischen Zelle (100) positioniert ist.

7. Verfahren zum Betreiben einer elektrochemischen Zelle (100) umfassend:
Erzeugen von Wärme mit einer elektrochemischen Zelle (100), umfassend eine negative Elektrode (102), eine positive Elektrode (104), und einen Separator (106), zwischen der negativen Elektrode (102) und der positiven Elektrode (104) positioniert, durch Laden oder Entladen der elektrochemischen Zelle (100); und
Verwenden der erzeugten Wärme zum Wechseln einer Phase von einem Phasenwechselmaterial (114, 124) innerhalb der elektrochemischen Zelle (100);
dadurch charakterisiert, dass
die Phase von einem der folgenden Fest-Festphasenwechselmaterialien (114, 124) gewechselt wird: 38,2%NPG/61,8%PE, 38,2%NPG/61,8%TAM, 76,4%NPG/33,6%TAM, 76,4%NPG/33,6%PE, 91%NPG/9%PE, 91%NPG/9%TAM, Neopentylglykol (NPG), Diamnopentacrythritol, 2-Amino-2-methyl-1,3-propandiol, 2-Methyl-2-mtro-1, 3-propandiol, Trumethylolethan, Pentaglycerin, 2-Hydroxymethyl-2-methyl-1,3-propandiol, Monoaminopentaerythritol, quervernetztes Polyethylen.

8. Verfahren nach Anspruch 7, Verfahren nach Anspruch 13, wobei das Erzeugen von Wärme mit der elektrochemischen Zelle (100) Folgendes umfasst:
Erzeugen von Wärme, während die elektrochemische Zelle (100) entlädt, durch einen Prozess, in welchem Lithiummetall in der negativen Elektrode (102) in ein Li⁺ Ion und ein freies Elektron ionisiert, und die Li⁺ Ionen durch den Separator (106) zu der positiven Elektrode (104) wandert.

9. Verfahren nach Anspruch 8, ferner umfassend:
Platzieren der elektrochemischen Zelle (100) in eine offene Schaltkreis-Konfiguration: und
Wechseln der Phase von dem Phasenwechselmaterial (114, 124) durch Anwenden externer Kühlung auf die elektrochemische Zelle (100), während sie in der offenen Schaltkreis-Konfiguration befindet.

10. Verfahren nach Anspruch 7, wobei das Verwenden der erzeugten Wärme zum Wechseln der Phase von dem Phasenwechselmaterial (114, 124) innerhalb der elektrochemischen Zelle (100) Folgendes umfasst:
Verwenden der erzeugten Wärme zum Wechseln der Phase von einem ersten
Phasenwechselmaterialabschnitt (114) innerhalb der negativen Elektrode (102) von der elektrochemischen Zelle (100).

11. Verfahren nach Anspruch 10, wobei das Verwenden der erzeugten Wärme zum Wechseln der Phase von dem Phasenwechselmaterial (114, 124) innerhalb der elektrochemischen Zelle (100) Folgendes umfasst:
Verwenden der erzeugten Wärme zum Wechseln der Phase von einem zweiten
Phasenwechselmaterialabschnitt (124) innerhalb der positiven Elektrode (104) der elektrochemischen Zelle (100).

## Revendications

1. Pile électrochimique (100) comprenant :
une électrode négative (102) ;
une électrode positive (104) ;
un séparateur (106) positionné entre l'électrode négative (102) et l'électrode positive (104) ; et
un matériau à changement de phase (114, 124) dans la pile électrochimique (100),
**caractérisée en ce que**
le matériau à changement de phase (114, 124) est un des matériaux à changement de phase solide-solide (114, 124) : 38,2 % NPG/61,8 % PE, 38,2 % NPG/61,8 % TAM, 76,4 % NPG/33,6 % TAM, 76,4 % NPG/33,6 % PE, 91 % NPG/9 % PE, 91 % NPG/9 % TAM, néopentylglycol (NPG), diamnopentacrythritol, 2-amino-2-méthyl-1,3-propanediol, 2-méthyl-2-mtro-1,3-propanediol, truméthyloléthane, pentaglycérine, 2-hydroxyméthyl-2-méthyl-1,3-propanediol, monoaminopentaérythritol, polyéthylène réticulé.

2. Pile électrochimique selon la revendication 1, dans laquelle une première partie (124) du matériau à changement de phase (124) est située dans l'électrode positive (104).

3. Pile électrochimique selon la revendication 2, dans laquelle une deuxième partie (114) du matériau à changement de phase (114) est située dans l'électrode négative (102).

4. Pile électrochimique selon la revendication 3, dans laquelle une troisième partie du matériau à changement de phase est située dans le séparateur (106).

5. Pile électrochimique selon la revendication 1, dans laquelle l'électrode négative (102) comprend une forme de lithium.

6. Pile électrochimique selon la revendication 4, dans laquelle une quatrième partie du matériau à changement de phase est située au niveau d'une surface externe de la pile électrochimique (100).

7. Procédé de fonctionnement d'une pile électrochimique (100) consistant à :
générer de la chaleur avec une pile électrochimique (100) comprenant une électrode négative (102), une électrode positive (104) et un séparateur (106) positionné entre l'électrode négative (102) et l'électrode positive (104) en chargeant ou déchargeant la pile électrochimique (100) ; et
utiliser la chaleur générée pour changer une phase d'un matériau à changement de phase (114, 124) dans la pile électrochimique (100) ;
**caractérisé en ce que**
la phase de l'un des matériaux à changement de phase solide-solide (114, 124) suivants est changée : 38,2 % NPG/61,8 % PE, 38,2 % NPG/61,8 % TAM, 76,4 % NPG/33,6 % TAM, 76,4 % NPG/33,6 % PE, 91 % NPG/9 % PE, 91 % NPG/9 % TAM, néopentylglycol (NPG), diamnopentacrythritol, 2-amino-2-méthyl-1,3-propanediol, 2-méthyl-2-mtro-1,3-propanediol, truméthyloléthane, pentaglycérine, 2-hydroxyméthyl-2-méthyl-1,3-propanediol, monoaminopentaérythritol, polyéthylène réticulé.

8. Procédé selon la revendication 7, procédé selon la revendication 13, dans lesquels la génération de chaleur avec la pile électrochimique (100) consiste à :
générer de la chaleur pendant que la pile électrochimique (100) se décharge par un processus dans lequel du lithium métallique dans l'électrode négative (102) s'ionise en ion Li⁺ et un électron libre et les ions Li⁺ se déplacent à travers le séparateur (106) vers l'électrode positive (104).

9. Procédé selon la revendication 8, consistant en outre à :
placer la pile électrochimique (100) dans une configuration de circuit ouvert : et
changer la phase du matériau à changement de phase (114, 124) en appliquant un refroidissement externe à la pile électrochimique (100) pendant qu'elle est dans la configuration de circuit ouvert.

10. Procédé selon la revendication 7, dans lequel l'utilisation de la chaleur générée pour changer la phase du matériau à changement de phase (114, 124) dans la pile électrochimique (100) consiste à :
utiliser la chaleur générée pour changer la phase d'une première partie de matériau à changement de phase (114) dans l'électrode négative (102) de la pile électrochimique (100).

11. Procédé selon la revendication 10, dans lequel l'utilisation de la chaleur générée pour changer la phase du matériau à changement de phase (114, 124) dans la pile électrochimique (100) consiste à :
utiliser la chaleur générée pour changer la phase d'une seconde partie de matériau à changement de phase (124) dans l'électrode positive (104) de la pile électrochimique (100).
